Europäisches Patentamt

European Patent Office

Office européen des brevets

(11) Numéro de publication : **0 519 951 B1**

(12) **FASCICULE DE BREVET EUROPEEN**

(45) Date de publication du fascicule du brevet :
**11.05.94 Bulletin 94/19**

(51) Int. Cl.⁵ : **C09B 67/00, // C09D5/00**

(21) Numéro de dépôt : **91905293.6**

(22) Date de dépôt : **14.03.91**

(86) Numéro de dépôt international :
**PCT/BE91/00019**

(87) Numéro de publication internationale :
**WO 91/13943 19.09.91 Gazette 91/22**

(54) **PIGMENTS ORGANIQUES AMELIORES, PROCEDE POUR LEUR PREPARATION ET UTILISATION DANS DES PEINTURES.**

(30) Priorité : **14.03.90 BE 9000287**

(43) Date de publication de la demande :
**30.12.92 Bulletin 92/53**

(45) Mention de la délivrance du brevet :
**11.05.94 Bulletin 94/19**

(84) Etats contractants désignés :
**AT BE CH DE DK ES FR GB GR IT LI LU NL SE**

(56) Documents cités :
**EP-A- 0 070 490**
**EP-A- 0 227 443**
**FR-A- 2 214 730**
**US-A- 3 991 044**

(56) Documents cités :
**Derwent Japanese Patents, Section Chemicals, week 8532, 26 June 1985 - 2 July 1985, Section Textiles, Paper, Cellulose, Derwent Publications Ltd., (London, GB), see page 12, abstract 192980, & JP, A, 60119279 (SUNSTAR K.K.) 25 June 1985**
**Chemical Abstracts, Vol. 101, No. 4, 23 July 1984, (Columbus, Ohio, US), see page 76, abstract 25043h, & JP, A, 5919530 (KAO CORP.) 1 February 1984**

(73) Titulaire : **COLOUR RESEARCH COMPANY (CORECO) LTD.**
**3, Fitzwilliam Place**
**Dublin 2 (IE)**

(72) Inventeur : **VERMOORTELE, Frank**
**Rue de Wattignies, 5**
**F-59000 Lille (FR)**
Inventeur : **MAYER, Jean**
**22, rue de Vlaminck**
**F-59510 Hem (FR)**

(74) Mandataire : **Van Malderen, Michel**
**Office van Malderen Place Reine Fabiola 6/1**
**B-1080 Bruxelles (BE)**

## Description

### Objet de l'invention

La présente invention concerne des pigments présentant des propriétés améliorées, notamment de brillant et de solidité. L'invention concerne également un procédé permettant d'obtenir de tels pigments et leur utilisation dans des peintures.

### Résumé de l'état de la technique

Les pigments organiques, en particulier les pigments azoïques trouvent une large application dans l'industrie des peintures. L'intérêt de ces pigments est la large gamme tinctoriale qu'ils rendent possible et leur coût modéré pour un pouvoir colorant élevé. Ils présentent cependant en général une opacité trop faible pour être utilisés seuls et des solidités insuffisantes.

On connaît pour ces pigments des techniques pour augmenter leur opacité; de tels traitements consistent notamment en un chauffage en présence de solvant, ou en milieu aqueux à haute température; ces traitements peuvent notamment être accompagnés d'une purification en milieu alcalin. De tels traitements sont par exemple décrits dans les brevets suivants: DE-3 128 057 FR-2 214 730, FR-2 117 428, FR-2 432 578, US-3991044.

Ces produits présentent cependant certains inconvénients; on peut citer en particulier le manque de brillant et la tendance à la floculation ou à la flottation. Enfin leurs solidités à la lumière et aux intempéries (notamment au dioxyde de soufre présent dans les atmosphères industrielles), bien qu'en général améliorées par les traitements cités ci-dessous, restent souvent encore insuffisantes pour une utilisation dans des peintures aux exigences élevées comme par exemple celles destinées aux carrosseries automobiles.

Le document EP-A-0 227 443 décrit le traitement de matières minérales argileuses notamment avec un polyéthylèneimine présentant un poids moléculaire bien particulier en vue de modifier les propriétés rhéologiques desdites matières.

### Buts de l'invention

La présente invention vise donc à améliorer les propriétés des pigments organiques, particulièrement des pigments azoïques dans les peintures, notamment le brillant, la résistance à la floculation ou la flottation et les solidités à la lumière et aux intempéries.

### Eléments caractéristiques de l'invention et arrière-plan technologique

L'invention porte sur un pigments organique, de préférence un pigment azoïque, caractérisé en ce qu'il a été traité, en vue d'améliorer ses caractéristiques en peinture à l'aide de polyalkylène-imine. Ce traitement peut s'effectuer aussi bien sur un pigment organique traité par ailleurs par des méthodes connues que sur un pigment non traité. Cependant, on préfère en général utiliser un pigment traité, particulièrement lorsqu'une opacité maximum est recherchée.

La technique de traitement à mettre en oeuvre sera décrite plus en détail ci-après, ainsi que l'utilisation des produits précités dans les peintures.

Parmi les polyalkylène-imine, le polyéthylène-imine (homopolymère de l'aziridine) est un produit commercial utilisé notamment dans l'industrie du papier, comme agent de dispersion des charges et pigments inorganiques et pour augmenter la résistance à l'eau.

On l'utilise également comme agent d'adhésion dans les encres d'impression et il a été également proposé pour traiter des charges silicées dans des procédés de vulcanisation décrits dans le brevet US-3 953 223 ainsi que pour traiter du noir de carbone en vue d'accroître l'adsorption sélective du $CO_2$, c'est à dire modifier le caractère actif de ce produit comme indiqué dans les documents US-4 771 089 et JP-63 259 927.

Enfin, des produits de réaction de polyéthylène-imine avec d'autres polymères ont été proposés comme agents dispersants.

Cependant, ces utilisations ne permettaient pas de prévoir que ce produit était capable de traiter des pigments organiques et d'en améliorer les propriétés. Bien au contraire, une société productrice (BASF) en déconseille l'usage dans les encres lorsque celles-ci contiennent certains pigments azoïques parmi lesquels le Pigment Rouge 48:4 du Color Index, qui fait l'objet des exemples 1 à 5 ci-après, (voir notice BASF: réf. Ti/P 3052 d: "Polymin(R) Wasserfrei": Technische Information, BASF sept. 1988).

En outre, le polyéthylène-imine est le plus souvent incompatible avec les peintures à solvants et son addition au moment du broyage des pigments ou à la peinture finie ne donne aucunement les résultats indiqués ci-dessus.

Le polyéthylène-imine est un produit commercial vendu notamment sous les marques "Polymin" de la firme BASF, "Epomin" de la firme Nippon Shokubai, ou "Corcoat" de la firme Hoechst Celanese.

Ces produits se présentent sous diverses qualités, qui se différencient principalement par leur degré de polymérisation: selon l'invention, des produits de masses molaires moyennes supérieures à 600 sont utilisées, de préférence comprises entre 1000 et 70 000.

Les homologues supérieurs de la série polyakylèneimine ne sont pas, à la connaissance de la Demanderesse, commercialisés mais peuvent être obtenus par analogie aux procédés d'obtention du polyéthylène-imine; en particulier, le polypropylène-imine peut être obtenu par le procédé décrit dans : "Preparation and polymerisation of D - and L - Propylene-imine and N-Methyl propylene-imine" by Yuji Minoura, Matsuji Takebayashi and charles C. Price, Journal of American Chemical Society, vol 81 (1959) p. 4689.

Pour la mise en oeuvre des polyalkylène-imines selon l'invention, en vue du traitement de pigments, une technique préférée consiste a ajouter le polyalkylène-imine en solution aqueuse à une suspension aqueuse de pigment avant isolement et séchage de celui-ci par les moyens habituels.

La quantité de polyalkylène-imine mise en oeuvre peut varier de 0,1 à 10% en poids par rapport au pigment, de préférence de 0,2 à 6 %.

Ainsi qu'il a été indiqué précédemment, les pigments mis en oeuvre peuvent avantageusement avoir subi un traitement préalable selon des techniques connues. De même, les produits selon l'invention peuvent contenir ou avoir été en contact avec des additifs utilisés de façon classique dans l'industrie des pigments, tels que tensio-actifs, résines, résinates métalliques etc.; ces additifs peuvent être ajoutés à un stade quelconque de la fabrication du produit.

A titre d'illustration de composés particulièrement avantageux pouvant trouver une application dans la technique de l'invention, on peut citer les pigments azoïques laques (sels) métalliques, tel le Pigment Rouge 48:4 (laque de manganèse) du Color Index (C.I. N° 15865:4), ainsi que les pigments dérivés du (4,4'-diamino 3,3'-dichlorodiphényle).

L'invention sera décrite plus en détail à l'aide des exemples suivants.

**Méthode d'examen des pigments organiques en peinture au four (Alkyde-mélamine)**

1. Réalisation de la peinture

On réalise le mélange suivant (% en poids):
- 72.35 % de SETAL 84 XX 70 à 70 % d'extrait sec, résine alkyde de la firme SYNTHESE
- 27.65 % de SETAMINE US135 à 60 % d'extrait sec, résine mélamine de la même firme.

On disperse 2.4 g de pigment dans 6.3 g de ce liant en ajoutant 6.3 g du mélange de solvants suivant: (en poids)
- Xylène: 70 %
- Butanol: 17.5 %
- Ethylglycol: 12.5 %

La dispersion peut être réalisée en 30 mn à l'aide d'un appareil "Red Devil", en ajoutant 30 g de billes de verre de diamètre 3 mm.

Après contrôle de la dispersion à la jauge de North (10 $\mu$m), on stabilise la dispersion par addition de 15 g de liant et homogénéisation.

Les tests sont effectués en teinte pure et dégradée avec une peinture blanche de même nature pigmentée à 25 % avec de l'oxyde de titane rutile du type RCR2 de la firme Tioxide, dans les proportions de
- 1 partie de pigment organique
- 9 parties d'oxyde de titane.

2. Application des peintures

La peinture pure ou dégradée est appliquée sur carton à contraste et sur plaque d'aluminium revêtue d'un apprêt de protection (pour les test SO$_2$), à l'aide d'un applicateur spirale (bar-coater) N° 7, correspondant à un film liquide d'épaisseur 75 $\mu$m. Les applications sont ensuite réticulées par cuisson dans une étuve à 130°C pendant 30 mn.

3. Description des tests réalisés

- Opacité:

Examen visuel comparatif des applications pures sur carton à contraste; mesure du pouvoir couvrant à l'état humide au cryptomètre de Pfund, (en m$_2$/g).

- Brillant:

Evaluation visuelle et par mesure à l'aide d'un brillancemètre, sous un angle d'incidence de 20°.

- Floculation ou flottation:

Evaluation avant cuisson par le test du "Rub-out" sur l'application dégradée.

- Rhéologie:

Le comportement rhéologique des peintures liquides est estimé à l'aide d'un viscosimètre à écoulement type "Lefranc" par la mesure de la distance d'écoulement de la peinture dans un temps donné: ce comportement est d'autant plus favorable que la distance est plus grande.

- Résistance au SO$_2$:

Evaluée par le test "Kesternich" (norme AFNOR NFT 30055 - ISO 3231) sur les plaques aluminium (teinte pure). Les écarts entre les parties exposées après 6 cycles et non exposées sont évalués visuellement par comparaison de la dégradation à celle d'une gamme étalon (échelle des gris), la cotation 5 signifiant la solidité maximum (pas de changement).

- Résistance aux ultra-violets:

Les plaques aluminium (teinte pure) sont exposées dans un appareil QUV Accelerated Weathering Tester (Q-Panel Company) pendant 150 heures à 45°C, sans condensation, lampes UVB 280-315 nm. On mesure le brillant et l'écart colorimétrique entre les parties exposées et non exposées (delta E CIELAB, illuminant D65, géométrie O°/diffus).

Exemple 1. (de référence)

On prépare une suspension de 45 g de Pigment Rouge 48:4 du Color Index par copulation de 22,15 g d'acide 3-chloro 4-méthyle aniline 6-sulfonique diazoté de manière classique, avec 17,86 g d'acide 2-hydroxy 3-naphtoïque, en présence d'hydroxyde de sodium, puis addition de 21,18 g de chlorure de manganèse hydraté MnCl$_2$.4H$_2$O. On chauffe à 85°C, maintient 30 mn à cette température, filtre, lave jusqu'à élimination des sels minéraux, et sèche.

Exemple 2. (selon l'invention)

On procède comme dans l'exemple 1, mais après filtration et lavage, on réempâte le produit, en ajoutant de l'eau jusqu'à un volume de 750 ml.

On ajoute alors sous agitation, une solution de 1,44 g de "Polymin wasserfrei" de la firme BASF dans 50 ml d'eau. On agite encore 15 mn, on filtre, lave avec 500 ml d'eau et sèche.

Exemple 3. (de référence, produit opacifié)

On procède comme dans l'exemple 1, mais après filtration et lavage, on réempâte dans l'eau jusqu'à un volume de 750 ml. Après homogénéisation, on introduit la suspension dans un autoclave de 1 litre, et on chauffe en 1 h jusqu'à 160°C. On maintient 1 h à cette température, puis on refroidit et on filtre, lave et sèche.

Exemple 4. (selon l'invention)

On procède comme dans l'exemple 3, mais après après sortie de l'autoclave, on reprend le produit et on ajoute sous agitation une solution de 1,44 g de "Polymin wasserfrei" de la firme BASF dans 50 ml d'eau. On agite encore 15 mn, on filtre, lave avec 500 ml d'eau et sèche.

L'application des pigments des exemples 1 à 4 en peinture selon les méthodes décrites donne les résultats suivants:

| TESTS | | Exemple 1 | Exemple 2 | Exemple 3 | Exemple 4 |
|---|---|---|---|---|---|
| Opacité: | - humide $m_2/l$ | 6,8 | 6,8 | 9,5 | 10,2 |
| | - sec | faible | +transp. | moyenne | élévée |
| Brillant: | - % (à 20°) | 73 % | 75 % | 68 % | 75 % |
| (sur carton) | - visuel | voile | bon | voile | bon |
| Rhéologie: | distance | 8,5 cm | 16 cm | 14 cm | 18 cm |
| | d'écoulement | (mauvaise) | (moyenne) | (moyenne) | (bonne) |
| Rub-out: | | mauvais | bon | mauvais | bon |
| Résistance après 6 cycles au $SO_2$ | ech.des gris | 1-2 | 4 | 2 | 4 |
| | (Brillant 20°: | | | | |
| Résistance | ( -avant Expos. | 80 % | 82 % | 75,5 % | 90 % |
| aux U.V. | ( -après Expos. | 58,5 % | 80 % | 45 % | 89 % |
| | (Delta E | 0,81 | 0,74 | 4,80 | 0,94 |

Exemple 5. (selon l'invention)

On procède comme dans l'exemple 4, mais en remplaçant le "polymin Wasserfrei" par la même quantité de polypropylène-imine préparé selon la référence citée page 3 (Yuji Minoura et al.)
On obtient un produit de propriétés très voisines de celui de l'exemple 4.

Exemple 6. (de référence)

On prépare une suspension de 45 g de Pigment Jaune 170 du Color Index par copulation de 16,57 g de 4,4'-diamino 3,3'-dichloro diphényle tétrazoté de manière classique, avec 27,66 g de 4'-méthoxyacétoacétanilide, à un pH compris entre 5,2 et 4. On chauffe à 95°C, maintient 1 h à cette température, filtre et lave jusqu'à élimination des sels minéraux. On réempâte le produit sous agitation en ajoutant de l'eau jusqu'à un volume de 750 ml et on augmente le pH jusqu'à 12 par addition d'une quantité suffisante d'hydroxyde de sodium.
Après homogénéisation, on introduit la suspension dans un autoclave, et on chauffe en 1 h jusqu'à 180°C. On maintient 1 h à cette température, puis on refroidit vers 60°C. Le pigment se présente sous sa forme cristalline béta (rougeâtre). On ajoute une solution de 1,68 g de "Staybelite resin" de la firme Hercules, dissous dans 100 ml d'eau avec 0,2 g d'hydroxyde de sodium. On filtre, lave avec 1500 ml d'eau et on sèche.

Exemple 7. (selon l'invention)

On procède comme dans l'exemple 6, mais après sortie de l'autoclave, vers 60°C, on reprend le produit et on ajoute sous agitation une solution de 1,44 g de "Polymin wasserfrei" de la firme BASF dans 50 ml d'eau. On agite 15 mn et on ajoute une solution de 1,68 g de "Staybelite resin" de la firme Hercules, dissous dans 100 ml d'eau avec 0,2 g d'hydroxyde de sodium. On filtre, lave avec 1500 ml d'eau et sèche.

L'application des pigments des exemples 6 et 7 en peinture selon les méthodes décrites donne les résultats suivants:

| Tests | | Exemple 5 | Exemple 6 |
|---|---|---|---|
| Opacité: | – humide $m_2/l$ | 8,4 | 9,5 |
| | – sec | moyenne | supérieure |
| Brillant: | – % (à 20°) | 72,8 | 81 |
| (sur carton) | – visuel | voile | bon |
| Rhéologie: | distance d'écoulement | 13,8 cm | 14,3 cm |
| | (Brillant 20°: | | |
| Résistance | ( –avant Expos. | 70 | 82 |
| aux U.V. | ( –après Expos. | 54 | 72 |
| | (Delta E | 4,4 | 2,8 |

## Revendications

1.  Procédé de traitement de pigments organiques caractérisé en ce que l'on traite le pigment par un polyalkylène-imine.

2.  Procédé selon la revendication 1 caractérisé en ce qu'on ajoute un polyalkylène-imine en solution aqueuse à une suspension aqueuse de pigment.

3.  Procédé selon la revendication 1 ou 2 caractérisé en ce que le pigment est un pigment azoïque.

4.  Procédé selon l'une quelconque des revendications précédentes caractérisé en ce que la quantité de polyalkylène-imine est comprise entre 0,1 et 10 %, de préférence entre 0,2 et 6 % en poids par rapport au pigment.

5.  Procédé selon l'une quelconque des revendications précédentes caractérisé en ce que la masse molaire moyenne du polyalkylène-imine utilisé est supérieure à 600, et de préférence comprise entre 1.000 et 70.000.

6.  Procédé selon l'une quelconque des revendications précédentes caractérisé en ce que le polyalkylène-imine est le polyéthylène-imine ou le polypropylène-imine.

7.  Procédé selon l'une quelconque des revendications précédentes caractérisé en ce que le pigment, préalablement au traitement par un polyalkylène-imine, subit un traitement complémentaire, en particulier un traitement d'opacification, ou l'addition d'additifs.

8. Procédé selon l'une quelconque des revendications précédentes caractérisé en ce que le pigment, après le traitement par un polyalkylène-imine, subit un traitement complémentaire ou l'addition d'additifs.

9. Procédé selon la revendication 8 caractérisé en ce que les additifs sont des additifs tensio-actifs.

10. Procédé selon la revendication 8 caractérisé en ce que les additifs sont des résines ou résinates métalliques.

11. Préparation à base de pigment caractérisée en ce qu'elle a été traitée par de 0,1 à 10 % en poids de polyalkylène-imine par rapport au pigment.

12. Préparation selon la revendication 11 caractérisée en ce qu'elle a été traitée par de 0,2 à 6 % en poids de polyalkylène-imine par rapport au pigment.

13. Préparation selon la revendication 11 ou 12 caractérisée en ce que le polyalkylène-imine est le polyéthylène-imine ou le polypropylène-imine.

14. Préparation selon l'une quelconque des revendications 11 à 13 caractérisée en ce qu'elle contient des additifs, en particulier des additifs tensio-actifs, des résines ou des résinates métalliques.

15. Utilisation de la préparation selon l'une quelconque des revendications 11 à 14 dans les peintures.

16. Utilisation de la préparation selon l'une quelconque des revendications précédentes 11 à 14 dans les peintures pour carrosseries d'automobiles.


**Claims**

1. Process for treatment of organic pigments, characterized in that the pigment is treated with a polyalkyleneimine.

2. Process according to claim 1, characterized in that a polyalkyleneimine in aqueous solution is added to an aqueous suspension of pigment.

3. Process according to claim 1 or 2, characterized in that the pigment is an azo pigment.

4. Process according to any one of the preceding claims, characterized in that the quantity of polyalkyleneiminie is between 0.1 and 10 %, preferably between 0.2 and 6 % by weight relative to the pigment.

5. Process according to any one of the preceding claims, characterized in that the average molecular mass of the polyalkyleneimine employed is higher than 600, and preferably between 1,000 and 70,000.

6. Process according to any one of the preceding claims, characterized in that the polyalkyleneimine is polyethyleneimine or polypropyleneimine.

7. Process according to any one of the preceding claims, characterized in that, before the treatment with a polyalkyleneimine, the pigment undergoes an additional treatment, in particular an opacifying treatment or the addition of additives.

8. Process according to any one of the preceding claims, characterized in that, after the treatment with a polyalkyleneimine, the pigment undergoes an additional treatment or the addition of additives.

9. Process according to claim 8, characterized in that the additives are surfactant additives.

10. Process according to claim 8, characterized in that the additives are resins or metal resinates.

11. Pigment-based preparation characterized in that it has been treated with 0.1 to 10 % by weight of polyalkyleneimine in relation to the pigment.

**12.** Preparation according to claim 11, characterized in that it has been treated with 0.2 to 6 % by weight of polyalkyleneimine in relation to the pigment.

**13.** Preparation according to claim 11 or 12, characterized in that the polyalkyleneimine is polyethyleneimine or polypropyleneimine.

**14.** Preparation according to any one of claims 11 to 13, characterized in that it contains additives, in particular surfactant additives, resins or metal resinates.

**15.** Use of the preparation according to any one of claims 11 to 14 in paints.

**16.** Use of the preparation according to any one of the preceding claims 11 to 14 in paints for car bodywork.


**Patentansprüche**

**1.** Verfahren zur Behandlung von organischen Pigmenten, dadurch gekennzeichnet, daß das Pigment mit einem Polyalkylen-imin behandelt wird.

**2.** Verfahren gemäß Anspruch 1, dadurch gekennzeichnet, daß ein Polyalkylen-imin in wässeriger Lösung zu einer wässerigen Pigmentsuspension zugegeben wird.

**3.** Verfahren gemäß Anspruch 1 oder 2, dadurch gekennzeichnet, daß das Pigment ein Azopigment ist.

**4.** Verfahren gemäß irgendeinem der vorhergehenden Ansprüche, dadurch gekennzeichnet, daß die Menge Polyalkylen-imin, bezogen auf das Pigment, zwischen 0,1 und 10 Gewichtsprozent, vorzugsweise zwischen 0,2 und 6 Gewichtsprozent liegt.

**5.** Verfahren gemäß irgendeinem der vorhergehenden Ansprüche, dadurch gekennzeichnet, daß die mittlere molare Masse des verwendeten Polyalkylen-imins über 600, und vorzugsweise zwischen 1.000 und 70.000 liegt.

**6.** Verfahren gemäß irgendeinem der vorhergehenden Ansprüche, dadurch gekennzeichnet, daß das Polyalkylenimin Poylethylen-imin oder Polypropylen-imin ist.

**7.** Verfahren gemäß irgendeinem der vorhergehenden Ansprüche, dadurch gekennzeichnet, daß bei dem Pigment vor der Behandlung mit einem Polyalkylen-imin eine zusätzliche Behandlung, insbesondere eine Trübungsbehandlung, durchgeführt wird, oder Additive zugegeben werden.

**8.** Verfahren gemäß irgendeinem der vorhergehenden Ansprüche, dadurch gekennzeichnet, daß bei dem Pigment nach der Behandlung mit einem Polyalkylen-imin eine zusätzliche Behandlung durchgeführt wird, oder Additive zugegeben werden.

**9.** Verfahren gemäß Anspruch 8, dadurch gekennzeichnet, daß die Additive grenzflächenaktive Additive sind.

**10.** Verfahren gemäß Anspruch 8, dadurch gekennzeichnet, daß die Additive Harze oder metallische Resinate sind.

**11.** Präparat auf Pigmentbasis, dadurch gekennzeichnet, daß es mit 0,1 bis 10 Gewichtsprozent Polyalkylenimin, bezogen auf das Pigment, behandelt wurde.

**12.** Präparat gemäß Anspruch 11, dadurch gekennzeichnet, daß es mit 0,2 bis 6 Gewichtsprozent Polyalkylen-imin, bezogen auf das Pigment, behandelt wurde.

**13.** Präparat gemäß Anspruch 11 oder 12, dadurch gekennzeichnet, daß das Polyalkylen-imin Polyethylen-imin oder Polypropylen-imin ist.

**14.** Präparat gemäß irgendeinem der Ansprüche 11 bis 13, dadurch gekennzeichnet, daß es Additive, insbesondere grenzflächenaktive Additive, Harze oder metallische Resinate enthält.

**15.** Verwendung des Präparats gemäß irgendeinem der Ansprüche 11 bis 14 bei Farben.

**16.** Verwendung des Präparats gemäß irgendeinem der Ansprüche 11 bis 14 bei Farben für Autokarosserien.